# EUROPEAN PATENT APPLICATION

(11) **EP 3 079 080 A1**
(43) Date of publication of application: **12.10.2016**
(21) Application number: 15162603.3
(22) Date of filing: 07.04.2015
(51) Int. Cl.: G06F 17/30

(54) **METHOD AND APPARATUS FOR PARALLEL PROCESSING A GROUP AGGREGATE FUNCTION**

(71) Applicant: Huawei Technologies Co., Ltd., Longgang District Shenzhen, Guangdong 518129 (CN)
(72) Inventor: Ramamurhti, Prasanna Venkatesh, 80992 Munich (DE); Behera, Mahesh Kumar, 80992 Munich (DE); Wolski, Antoni, 80992 Munich (DE)
(74) Representative: Goddar, Heinz J.

(57) **Abstract**

A computer-implemented method for parallel processing a group aggregate function on a set of data, comprising the steps of clustering the set of data based on a grouping property of the group aggregate function to obtain a plurality of clusters, allocating the plurality of clusters to a plurality of processing threads, and processing in parallel the group aggregate function in the plurality of processing threads.

## Description

### TECHNICAL FIELD

The present invention relates to a method and an apparatus for parallel processing a group aggregate function on a set of data. The present invention also relates to a computer-readable storage medium comprising instructions for carrying out a method for parallel processing a group aggregate function on a set of data.

### BACKGROUND

In the database domain, aggregation is a fundamental requirement in all analytical databases. Compared to complete aggregation, aggregation grouped by the values of certain attributes is even more significant. Such operations can be termed as grouped aggregations. Grouped aggregations are expressed in SQL using the GROUP BY clause. Such a statement is used in conjunction with the aggregate functions to group the result-set by one or more columns. The key challenge in the implementation of grouped aggregates is to determine the groups and the rows corresponding to these groups. There are three well-known implementation techniques to determine the groups: Nested Loops, Sorting, and Hashing.

The following is a very simple example of a grouped aggregate query issued against a table in a database, by using the aggregate function "SUM" on "sales_value" grouped by the grouping property "pdt_id":
SELECT SUM(sales_value), SUM(sales_pieces) FROM dimension_tab GROUP BY pdt_id WHERE pdt_type = 'car';

When a query is composed of several relational algebra operators, the result of one operator is sometimes pipelined to another operator without creating a temporary relation to hold the intermediate result. Pipelining (or on-the-fly processing) is sometimes used to improve the performance of the queries. Pipelining reduces the latency of a query thereby improves the perceived user experience in some cases.

If the output of an operator operation is saved in a temporary relation for processing by the next operator, it is said that the tuples are materialized. Thus, this process of temporarily writing intermediate algebra operations is called materialization.

Executing group aggregate functions, i.e. functions that compute grouped aggregates, is a resource-consuming operation. The best case complexity lies in O(n·log n), where 'n' is the number of records fed to the aggregate. Hence it is beneficial to parallelize their execution. Grouped aggregates are by nature materialized. That is to say all the input data for the grouping have to be materialized and only then the results can be produced. This materialized nature of the grouped aggregates makes parallelization of grouped aggregates difficult.

An implementation for computing group aggregate functions is known from US 5,850,547. There, it is suggested that data from a table is partitioned into multiple subsets of data and each of the multiple subsets of data is allocated to one of a plurality of processes. Intermediate aggregations are performed in parallel by the plurality of processes on each of the multiple subsets of data. Each intermediate aggregation yields at least one intermediate value, wherein the at least one intermediate value is represented in an internal type format. The intermediate values from each of the intermediate aggregations are merged into a final aggregation value.

### SUMMARY OF THE INVENTION

The inventors realized that with the prior art solutions for computing group aggregate functions, the efficiency is not optimal.

In view of the above, one object of the present invention is to provide a method, an apparatus, a computer-readable storage medium and a data structure for computing group aggregate functions in a more efficient way. The foregoing and/or other objects are achieved by the features of the independent claims. Further implementation forms are apparent from the dependent claims, the description and the Figures.

A first aspect of the invention provides a computer-implemented method for parallel processing a group aggregate function on a set of data, comprising the steps of:
- clustering the set of data based on a grouping property of the group aggregate function to obtain a plurality of clusters,
- allocating the plurality of clusters to a plurality of processing threads, and
- processing in parallel the group aggregate function in the plurality of processing threads.

Clustering the set of data based on a grouping property of the group aggregate function can be performed such that one or more elements of the set of data which according to the grouping property belong to the same group are assigned to the same cluster of the plurality of clusters. In other words, the clustering can ensure that elements of the set of data which belong to the same group are assigned to the same cluster. In this case, a cluster may comprise elements from the set of data that belong to different groups, but elements of one group are not shared between different clusters.

This has the advantage that when the group aggregate function is computed for a certain cluster, the result for this cluster already comprises the final result for the groups that were assigned to this cluster. Therefore, when computing one cluster is finished, results for the groups in this cluster are already available and can be forwarded for further processing, without having to wait for the processing of the other clusters to finish.

Preferably, the clustering is performed such that each cluster is assigned approximately equal numbers of elements of the set of data.

Modern processors are often equipped with SIMD (single-instruction, multiple-data) hardware which allows performing so-called vectorized processing, that is, executing the same operation on a series of closely adjacent data. Prior art parallel grouped aggregates use SIMD in limited ways to compute the aggregates. In embodiments of the present invention, SIMD can be used in more phases of the parallel grouped aggregates.

Columnar stores store each column separately. A notional row is bound by row-ids shared by the column stores. Some of the prior art repartition techniques involve copying of the columns on which grouping is done and also the columns which need to be aggregated. This model does not leverage the storage layout of columnar databases.

According to a first implementation of the method according to the first aspect, clustering the set of data comprises a step of radix clustering the set of data, in particular radix clustering using the least significant bits of a grouping property of the set of data.

To perform the clustering using a radix clustering algorithm has the advantage that the clustering can be performed very efficiently, while still ensuring that elements of the set of data that belong to the same group (as determined by the grouping property) are assigned to the same cluster.

According to a second implementation of the method according to the first aspect, each of the plurality of processing threads is assigned to at least one core of a processor with a plurality of cores. This has the advantage that the computation can be performed efficiently on a multi-core processor.

According to a third implementation of the method according to the first aspect, the method further comprises an initial step of filtering input data and obtaining the set of data as a result of the filtering. Thus, the method can be efficiently performed on a larger set of data by first obtaining the relevant subset of data through filtering. Preferably, the filtering step is performed before the clustering step.

According to a fourth implementation of the method according to the first aspect, the filtering is performed by partitioning the input data and filtering each partition by a separate worker thread. Thus, the method can be performed on very large sets of data. In particular, the same worker thread can perform the filtering and the radix clustering.

According to a fifth implementation of the method of the first aspect, the set of data is organized in columns. This allows for efficient processing on structured data.

According to a sixth implementation of the method of the first aspect, clustering the set of data comprises the steps:
- clustering a grouping column that corresponds to the grouping property of the group aggregate function to obtain clusters of the grouping column, and
- expanding the clusters of the grouping column with aggregate columns.

Thus, clustering is performed using only the data relevant for the clustering algorithm. After the clustered grouping column is obtained, the clustered grouping column is expanded with the aggregate columns to obtain the complete cluster.

According to a seventh implementation of the method of the first aspect, the method according to the first aspect of the invention further comprises a step of gathering information about the data of a single cluster. Such data may be necessary for plurality of processing threads to efficiently process the group aggregate function on the plurality of clusters.

According to an eighth implementation of the method of the first aspect, the aggregate function of the group aggregate function is one of summing, averaging, minimum, maximum, or counting. These aggregate functions can be particularly efficiently computed.

According to a ninth implementation of the method of the first aspect, more than one of the plurality of clusters is assigned to a processing thread. For example, if there are more clusters than available processing cores, it can be beneficial that more than one cluster is computed on a given processing core. In this way, embodiments of the invention can implement a combination of parallel and sequential processing of the aggregate function on the plurality of clusters.

According to a tenth implementation of the method of the first aspect, the plurality of processing threads performs group aggregation by hashing, sorting and/or going through a nested loop. Thus, group aggregation can be performed on each of the clusters in the same way as it would be performed by a single thread on the original set of data - with a speedup that ideally corresponds to the number of processing threads (or the number of clusters, if one processing thread is assigned to each cluster).

A second aspect of the invention provides an apparatus that is configured to perform the method of the first aspect of the invention. In particular, there is provided an apparatus that is configured to perform the method according to one of the implementations of the first aspect of the invention.

According to a first implementation of the second aspect of the invention, the apparatus comprises a processor with a plurality of cores, wherein one or more of the processing threads are affined to one of the plurality of cores. A multi-core processor provides efficient ways of processing in parallel the plurality of clusters in the plurality of processing threads.

According to a second implementation of the second aspect of the invention, the apparatus is a computing device with a non-uniform memory access architecture, wherein the computing device is adapted to assign a local cluster to a processing thread if a predetermined percentage of data of the local cluster is present in a local memory of a core to which the processing thread is assigned. Thus, the clusters are not randomly assigned to processing threads, but each of the clusters is assigned to a processing thread (and corresponding core) that is most suited to process this cluster.

A third aspect of the invention provides a computer-readable storage medium storing program code, the program code comprising instructions for carrying out the method of the first aspect of the invention, in particular the method of one the implementations of the first aspect of the invention.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.
- FIG. 1: shows a flow chart of a method for parallel processing a group aggregate function according to embodiments of the invention,
- FIG. 2: shows an input table and a materialized results table that is obtained by filtering the input table in accordance with the present invention,
- FIG. 3: shows a schematic illustration of radix clustering to obtain a plurality of clusters in accordance with the present invention,
- FIG. 4: shows a schematic illustration of a step of projecting on aggregation columns in accordance with the present invention,
- FIG. 5: shows a schematic illustration of an example of metadata of a cluster in accordance with the present invention,
- FIG. 6: shows a schematic illustration of a grouped aggregate for one cluster in accordance with the present invention, and
- FIG. 7: shows a flow chart of a method for parallel processing a group aggregate function according to further embodiments of the invention.

### Detailed Description of the Embodiments

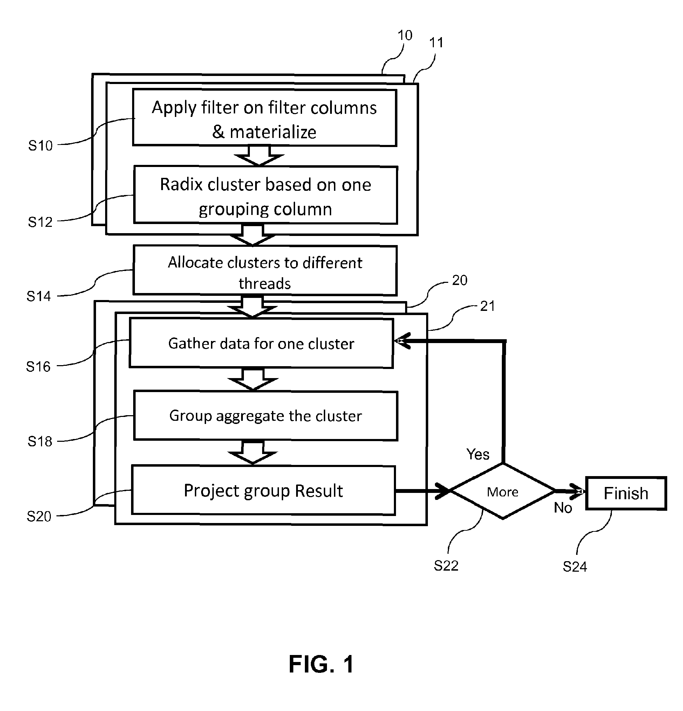

With reference to FIG. 1, an exemplary realization of the inventive method is presented. In this embodiment, the method comprises 6 steps, as illustrated in the following.

FIG. 1 depicts an input table 200, (i.e., 'dimension_tab'). The input table comprises a plurality of columns: a Row_ID column 201, a PDT_ID column 202, a PDT_Type column 203, a Sales_value column 204, and a Sales_piece column 205.

The method shall be illustrated with the following example of an SQL statement for computing the group aggregate function "SUM" on the input table 'dimension_tab' 200:
SELECT SUM(sales_value), SUM(sales_piece) FROM dimension_tab GROUP BY pdt_id WHERE pdt_type = 'car';

In a first step S10, the input table is (horizontally) partitioned; there is a worker thread per partition. In each worker thread, a filter that results from the query selection predicate (the WHERE clause) is applied. In the present example, the filter is "pdt_type = car". Filtering can be performed in two sub-steps (not shown in FIG.1):
1. Apply the filter condition on each filter column independently. This step uses sequential access of memory and can use SIMD for applying the filter.
2. After applying the filter to the columns, project the grouping and aggregation columns. The projected columns are materialized to perform grouping.

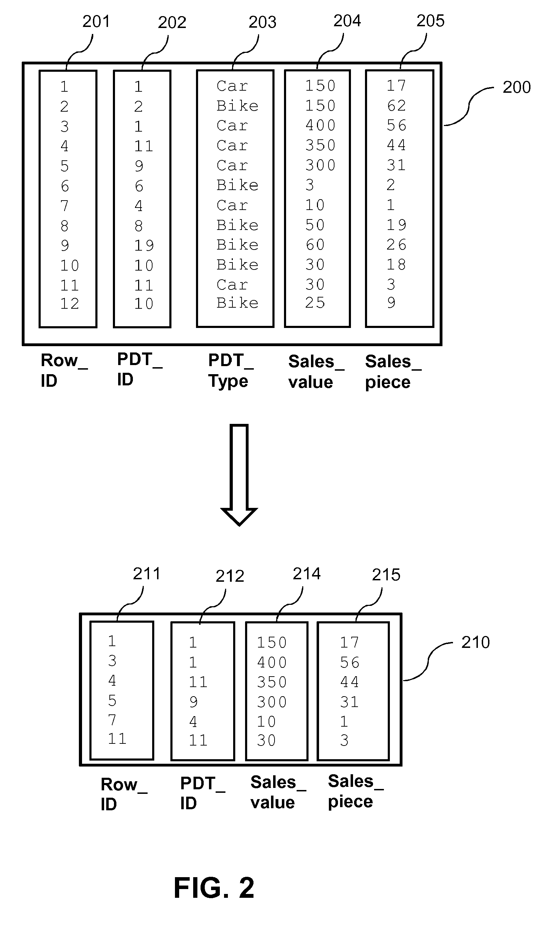

FIG. 2 illustrates an example of an input table 200 that is filtered according to step S10 shown in FIG. 1. The filtering step yields a materialized results table 210, comprising only those entries from the input table 200, where PDT_Type is set to 'car', that is, the first, third, fourth, fifth, seventh, and ninth rows of the table 200. Thus, the materialized results table comprises a Row_ID column 211, a PDT_ID column 212, a Sales_value column 214, and a Sales_piece column 215.

In a second step S12, radix clustering is applied based on a grouping column of the materialized results table 210. Step S12 can be performed with the following sub-steps (not shown in FIG. 1):
1. Apply radix clustering methods to cluster the output of step S10. For example, two least significant bits can be used, resulting in four clusters. Each cluster carries the GROUP BY columns values and the corresponding row_IDs.
2. Single instruction, multiple data (SIMD)-processing is used to generate the clusters: scan the input column sequentially, mask the radix bits to obtain the cluster number, and write each cluster sequentially.

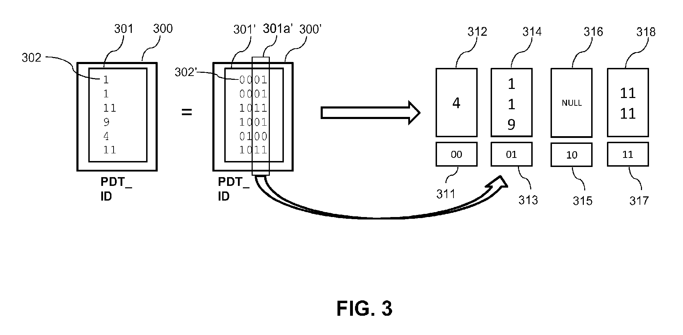

FIG. 3 illustrates the radix clustering based on the grouping column PDT_ID. A local partition 300 comprises the grouping column PDT_ID in decimal representation 301, with elements 302. The elements 302 are shown in FIG. 3 on the left in decimal representation. Equivalently, they can be shown in binary representation 302', indicated in FIG. 3 as elements of the grouping column 301' of the local cluster 300' in binary representation. Radix clustering is performed on the N least significant bits 301a' of the elements of the grouping column 301' (the "radix bits"). This results in 2^{N} clusters.

Preferably, the clustering is performed such that each cluster is assigned approximately equal numbers of elements of the set of data.

In the example shown in FIG. 3, clustering is performed on the two least significant bits, which results in a number of 4 clusters. FIG. 3 shows the cluster IDs 00, 01, 10, 11 next to the cluster elements 312, 314, 316, 318 assigned to these clusters. The first cluster corresponds to the least significant bits `00' and comprises one element 312 (with PDT_ID 4). The second cluster corresponds to the least significant bits '01' and comprises three elements 314 (with PDT_ID 1, 1, and 9). The third cluster corresponds to the least significant bits `10' and comprises no elements (indicated as NULL element 316). The fourth cluster corresponds to the least significant bits '11' and comprises two elements 318 (with PDT_ID 11, 11).

Furthermore, in step S12 each processing thread continues by expanding local clusters with aggregate columns, in a one-by-one-way. Then, the aggregation columns are projected in local clusters. Since each thread operates on data existing in its local memory, access to remote memory is avoided, i.e., the projection operation is NUMA-friendly.

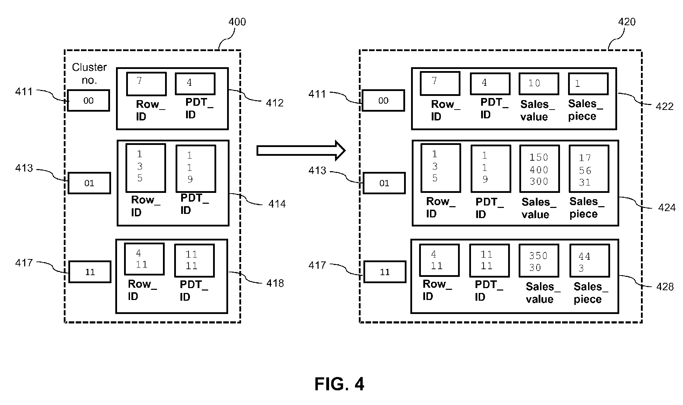

The diagram in FIG. 4 illustrates the expansion with aggregate columns and the projection operations that are performed by one thread. The diagram illustrates the plurality of clusters from FIG. 3, wherein clusters to which no elements have been assigned during the previous method step, are not considered. The plurality of clusters 400 comprises clusters with cluster IDs 411, 413, 415, corresponding to the least significant bits 00, 01, and 11. There is no cluster corresponding to the least significant bits 10, because no elements were assigned to this cluster. Before projecting the aggregation columns, each cluster comprises a set of entries 412, 414, 418 with columns Row_ID and PDT_ID. After projecting on the aggregation columns Sales_value and Sales_piece, each cluster 422, 424, 428 also comprises columns Sales_value and Sales_piece.

In the embodiment shown in FIG. 1, the filtering step S10 and the clustering step S12 are performed by the same threads 10, 11. In other embodiments, separate threads can perform the filtering on the one hand, and the clustering on the other hand.

In step S14 of the method illustrated in FIG. 1, the clusters are assigned to different threads. Based on the nature of the data distribution, each core can be assigned one or more total clusters to be processed. A core (or a thread affined to a core) can be assigned a cluster if a larger percentage of the cluster's data is present in its local memory. This will reduce remote memory access.

In step S16 of the method illustrated in FIG. 1, information is gathered about the data of a single total cluster. A single total cluster is spread across discontinuous memory. This is because each thread individually performed the clustering. A thread which will perform the grouping on a single cluster will need to gather all these cluster data. The gathering is done by the thread obtaining the starting address and the number of items in that address.

Preferably, the table data is not copied. Even if a piece of a total cluster is present in the remote node, the access is going to be sequential.

The data in the local clusters will be stored by different threads at different memory locations. The global cluster is formed by consolidating these memory addresses into one data structure.

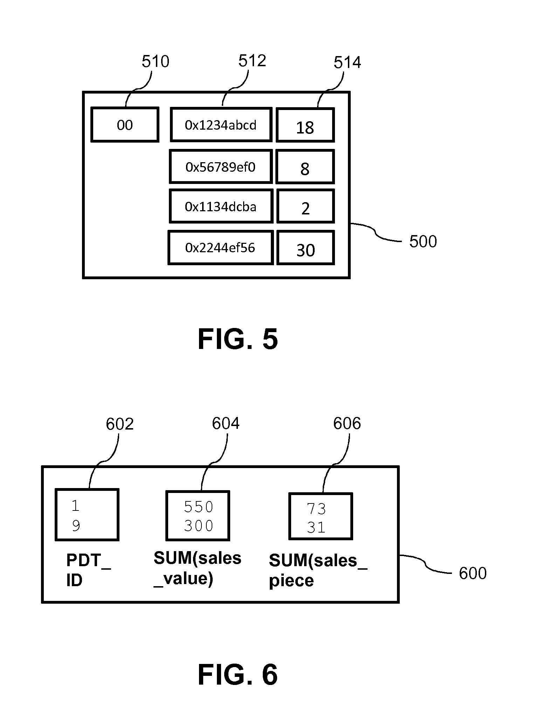

FIG. 5 illustrates the metadata 500 for one global cluster (the global cluster corresponding to the least significant bits '00'). Besides the cluster number 510, the cluster metadata 500 comprise, for each of a plurality of local clusters, the starting address 512 and the number of items 514 found at that starting address. In this way, the local clusters can be consolidated into a global cluster.

In step S18, group aggregation is performed on one cluster. The grouping can be done by any method, e.g. hashing, sorting or nested loop. The group aggregation can be done in parallel, independently for each total cluster. Preferably, the aggregation is performed by looking up the aggregation column values present in the clustered data.

FIG. 6 shows a schematic illustration of the grouped aggregate for one cluster (the cluster corresponding to least significant bits '01'). The first column 602 of the grouped aggregate is the grouping column PDT_ID. The second column 604 shows the sum of the aggregate column sales_value corresponding to the IDs in the first column 602.The third column 606 comprises the sums of the aggregate column sales_piece corresponding to the IDs in the first column 602.

In step S20 of the method illustrated in FIG. 1, the result set is projected. Once the grouping is done by a thread, it can project out the result values. If further clusters exist, or a higher operator demands more rows, the threads will go to steps S16 and S18.

As indicated in FIG. 1, the same threads 20, 21 perform the steps of gathering cluster data S16, group aggregating one cluster S18 and projecting the group result S20. In other embodiments of the invention, these steps S16, S18 and S20 are performed by different threads.

In step S22, it is determined whether there are further clusters that have not been processed yet. If so, the method proceeds with step S16 and gathers cluster data for the cluster that has not been processed yet. Once all clusters have been processed, the method ends with step S24.

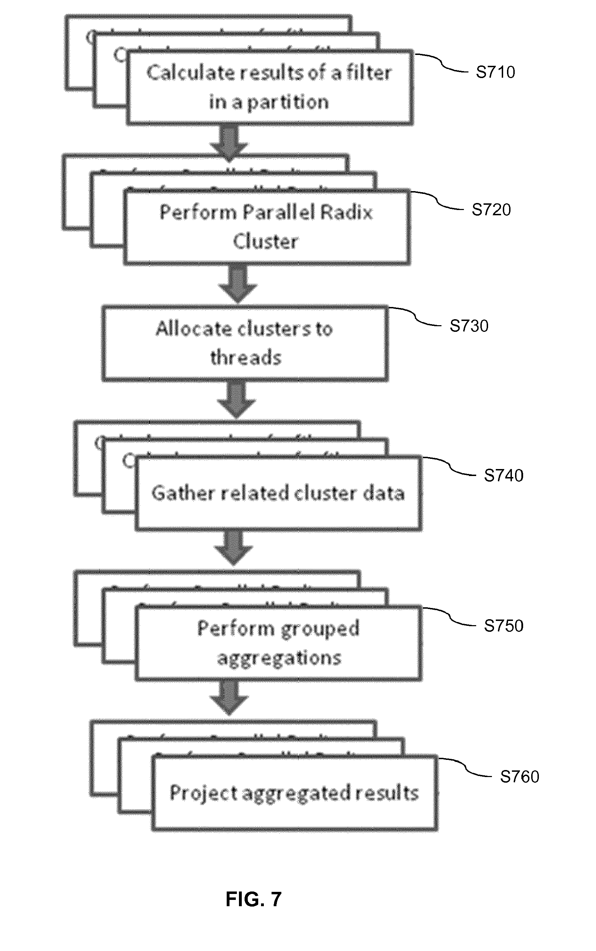

FIG. 7 shows a flow chart of a further embodiment of the present invention. This embodiment relates to a further method of grouping aggregates in a database management system involving parallel query processing over partitioned data. An example query can be expressed with an SQL statement of the form "SELECT A, ... FROM table WHERE ... GROUP BY A". The embodiment applies to the execution of the GROUP BY clause. The query processor produces, in parallel worker threads, unsorted results written to local memory (a partition) of each thread.

In step S710, for each partition, the results of a filter are calculated. In step S720, each (filtered) partition is radix clustered locally by a dedicated thread. In step S730, clusters are allocated to the threads in such a way that (a) the data value ranges are calculated to contain approximately equal amounts of data, (b) the data value range partitions are allocated to memory that is local to worker threads. In step S740, each thread gathers all the data related to the cluster allocated to itself to a local memory of the thread. In step S750, each cluster is group aggregated locally. In step S760, the result set parts are projected directly from the thread which operated on the cluster.

Other embodiments of the invention are possible. For example, in a database management system, steps S720, S730 and S740 can be applied in the in the execution of other SQL statement clauses like GROUP BY on JOIN.

To summarize, the methods illustrated in FIGs. 1 and 7 takes advantage of pipelining of group aggregation by reduced materialization along with taking benefit of hardware parallelization benefits (like SIMD). Most part of the method is executed in parallel threads on horizontal table partitions which results in a high level of parallelism and vectorized processing (SIMD). Radix clustering using SIMD can be used for clustering, which is much faster than complete repartitioning. Clustered groups are created before grouping is started. This improves the response time of the algorithm; the first result set can be pushed out early. Clustered groups creation removes the expensive serial phase of the parallel group-by algorithm. Finally, radix clustering of a pseudo row-id column can avoid unnecessary row materializations and column projections.

The foregoing descriptions are only implementation manners of the present invention; the protection of the scope of the present invention is not limited to this. Any variations or replacements can be easily made through person skilled in the art. Therefore, the protection scope of the present invention should be subject to the protection scope of the attached claims.

## Claims

1. A computer-implemented method for parallel processing a group aggregate function on a set of data, comprising the steps of:
- clustering the set of data based on a grouping property of the group aggregate function to obtain a plurality of clusters,
- allocating the plurality of clusters to a plurality of processing threads, and
- processing in parallel the group aggregate function in the plurality of processing threads.

2. The method of claim 1, wherein clustering the set of data comprises a step of radix clustering the set of data, in particular radix clustering using the least significant bits of a grouping property of the set of data.

3. The method of one of the previous claims, wherein each of the plurality of processing threads is assigned to at least one core of a processor with a plurality of cores.

4. The method of one of the previous claims, further comprising an initial step of filtering input data and obtaining the set of data as a result of the filtering.

5. The method of claim 4, wherein the filtering is performed by partitioning the input data and filtering each partition by a separate worker thread.

6. The method of one of the previous claims, wherein the set of data is organized in columns.

7. The method of one of the previous claims, wherein clustering the set of data comprises the steps:
- clustering a grouping column that corresponds to the grouping property of the group aggregate function to obtain clusters of the grouping column, and
- expanding the clusters of the grouping column with aggregate columns.

8. The method of one of the previous claims, further comprising a step of gathering information about the data of a single cluster.

9. The method of one of the previous claims, wherein the aggregate function of the group aggregate function is one of summing, averaging, minimum, maximum, or counting.

10. The method of one of the previous claims, wherein more than one of the plurality of clusters is assigned to a thread.

11. The method of one of the previous claims, wherein the plurality of processing threads perform group aggregation by hashing, sorting and/or going through a nested loop.

12. An apparatus which is configured to perform the method of one of the previous claims.

13. The apparatus of claim 12, wherein the apparatus comprises a processor with a plurality of cores, wherein one or more of the processing threads are assigned to one of the plurality of cores.

14. The apparatus of claim 13, wherein the apparatus is a computing device with a non-uniform memory access architecture, wherein the computing device is adapted to assign a local cluster to a processing thread if a predetermined percentage of data of the local cluster is present in a local memory of a core to which the processing thread is assigned.

15. A computer-readable storage medium storing program code, the program code comprising instructions for carrying out the method of one of claims 1 to 11.
